# EUROPÄISCHE PATENTANMELDUNG

(11) **EP 1 530 118 A1**
(43) Veröffentlichungstag der Anmeldung: **11.05.2005**
(21) Anmeldenummer: 04405380.9
(22) Anmeldetag: 18.06.2004
(51) Int. Cl.: G06F 1/16, F16M 13/02

(54) **Erweiterungsvorrichtung für einen Flachbildschirm und Flachbildschirm**

(30) Priorität: 06.11.2003 EP 03405797
(71) Anmelder: Dicom AG, 6343 Rotkreuz (CH)
(72) Erfinder: Bieri, Martin, 4539 Rumisberg (CH)
(74) Vertreter: RUTZ & PARTNER

(57) **Zusammenfassung**

Die für die Verbindung mit einem Flachbildschirm (1) vorgesehene Erweiterungsvorrichtung (2) weist wenigstens eine Baugruppe (31, ..., 3n) einschliesslich einer Computerbaugruppe (31) auf, die der Speicherung, Übertragung oder Verarbeitung von Bildinformationen dient, die zu der von einer tragenden Struktur (10) gehaltenen, grossflächigen Anzeigeeinheit (12) des Flachbildschirms (1) übertragbar sind. Erfindungsgemäss weist die Erweiterungsvorrichtung (2) eine Tragvorrichtung (21) mit wenigstens einem Halteelement (2110, 2120) auf, welches an der Oberseite der Tragvorrichtung (21) angeordnet ist und in ein entsprechend ausgestaltetes Aufnahmeteil (101), das an der Unterseite der tragenden Struktur (10) des Flachbildschirms (1) angeordnet ist, eingreifen und die tragende Struktur (10), in Bezug auf die Tragvorrichtung (21) in konstanter Lage halten kann.

## Beschreibung

Die vorliegende Erfindung betrifft eine Erweiterungsvorrichtung für einen Flachbildschirm und einen mit der Erweiterungsvorrichtung versehenen Flachbildschirm nach dem Oberbegriff des Anspruchs 1 bzw. 10.

Die Erfindung betrifft insbesondere eine Erweiterungsvorrichtung, mittels der wenigstens eine Baugruppe einschliesslich einer Computerbaugruppe, die der Speicherung, Übertragung oder Verarbeitung von Bildinformationen dient, an den Flachbildschirm ankoppelbar ist.

Auf dem Markt erhältliche Flachbildschirme, die auf der Flüssigkristall-, Plasma-, oder Elekrolumineszenz-Technologie basieren, weisen im wesentlichen eine mit Glassubstraten und einer Pixelmatrix versehene Anzeigeeinheit mit einer Bildschirmdiagonale von über 100 cm, eine mit einer Leiterplatte versehene Treibereinheit und ein Gehäuse auf.

Der Aufbau eines solchen Flachbildschirms ist in [1], EP 1 265 210 A1 beschrieben. Dort ist ferner angegeben, dass die Daten der darzustellenden Bilder dem Treibermodul beispielsweise über einen Datenbus von einer externen Datenquelle zuführbar sind.

Aus [2], WO 02/25943 ist ferner ein als Multimedia-Wiedergabegerät ausgebildeter Flachbildschirm bekannt, in dem die für die Verarbeitung eines Fernsehsignals notwendigen Module sowie eine der Realisierung der Funktionen eines Personalcomputers dienende Computerbaugruppe integriert sind. Der Anwender kann daher wahlweise ein demoduliertes Fernsehsignal oder ein von den Personalcomputer-Modulen abgegebenes Videosignal auf der Anzeigeeinheit darstellen.

Nachteilig bei dieser Vorrichtung ist, dass der Flachbildschirm für die Aufnahme der Computerbaugruppe entsprechend auszurüsten ist, wodurch einerseits höhere Herstellungskosten und andererseits grössere Abmessungen resultieren.

Bei nicht mit Computerbaugruppen versehenen Flachbildschirmen, die in Ausstellungen oder in Hallen als Informationstafeln dienen, und die dazu mittels einer Montagevorrichtung montiert sind, werden oft Personalcomputer im Notebook-Format angehängt, um computergenerierte Daten oder Bilder darzustellen. Die Personalcomputer werden dazu am Flachbildschirm oder an der Montagevorrichtung befestigt, beispielsweise mittels Riemen angeschnallt.

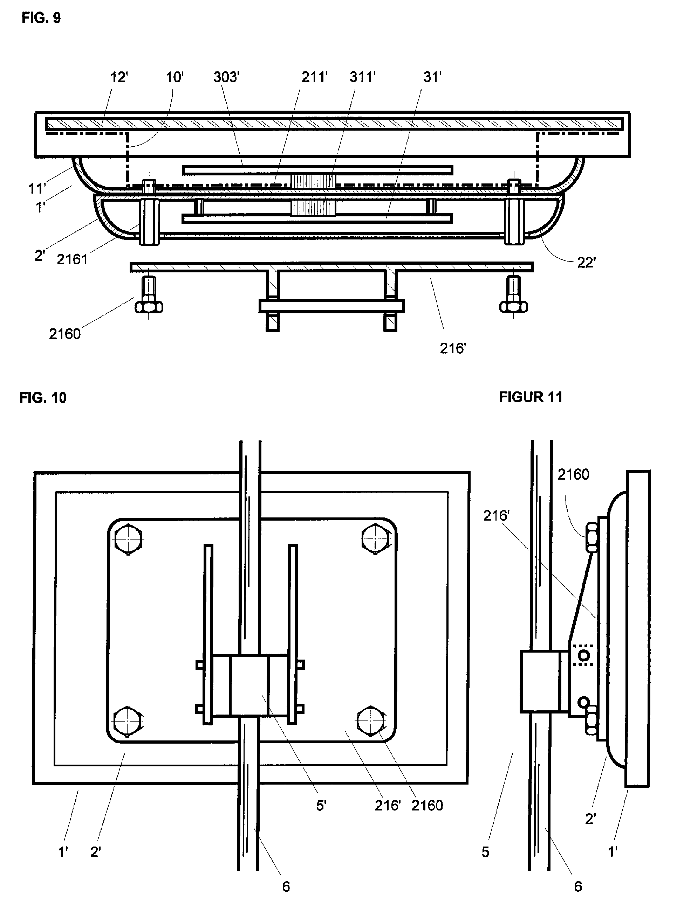

In [3], EP 1 244 000 A2 ist eine Erweiterungsvorrichtung für eine Computerbaugruppe bekannt, die als Schubladenfach ausgebildet und lösbar mit der Rückseite eines Flachbildschirms verbindbar ist. Die Erweiterungsvorrichtung weist birnenförmige Ausnehmungen auf, die in nagelkopfförmige Befestigungselemente eingehängt werden können, die an der Rückseite des Flachbildschirms vorgesehen sind. Der Flachbildschirm kann daher modular mit der Erweiterungsvorrichtung gekoppelt werden. Bei der Verbindung des Flachbildschirms mit einer Montagevorrichtung tritt das derart montierte Schubladenfach bzw. die Erweiterungsvorrichtung jedoch störend in Erscheinung. Eine Montage des normalerweise sehr schweren Flachbildschirms durch Verbinden der Erweiterungsvorrichtung mit der Montagevorrichtung ist nicht möglich, weil sich diese vom Flachbildschirm lösen könnte. Dieses Problem wird mittels der in Figur 9 gezeigten Vorrichtung gelöst, die Gegenstand der europäischen Patentanmeldung No. 03 405 797.6 ist.

Der in Figur 9 gezeigte Flachbildschirm 1', der ein Bildschirmgehäuse 11' mit einer Anzeigeeinheit 12' und einer Bildverarbeitungseinheit 303 aufweist, ist mit einem kastenförmigen Erweiterungsvorrichtung 2' verbunden, die ein Vorrichtungsgehäuse 22' aufweist, das der Aufnahme wenigstens einer Computerbaugruppe 31 dient, die mittels eines Kabels 311 mit der Bildverarbeitungseinheit 303 verbindbar ist.

Die Computerbaugruppe 31 ist mit der am Bildschirmgehäuse 11' anliegenden Grundplatte des Vorrichtungsgehäuses 22' lösbar verbunden, wobei diese Grundplatte mit Öffnungen versehen ist, durch die Montageschrauben führbar sind, mittels derer das Vorrichtungsgehäuse 22 mit der tragenden Struktur 10' des Flachbildschirms 1 verbindbar ist. Dadurch resultieren eine stabile Montage der Computerbaugruppe 31 im Vorrichtungsgehäuse 22' sowie eine stabile Verbindung des Vorrichtungsgehäuses 22 und des Bildschirmgehäuses 11 mit der tragenden Struktur 10' des Flachbildschirms 1'.

Die der Montage des Vorrichtungsgehäuses 22' dienenden ersten Montageschrauben 2161 weisen vorzugsweise ein mit der tragenden Struktur 10' verbindbares erstes Gewinde und ein Distanzelement auf, das in den Innenraum des Vorrichtungsgehäuses 22' hineinragt oder vollständig durch dieses hindurch tritt und das am anderen Ende mit einem zweiten Gewinde versehen ist, welches der Aufnahme einer zweiten Montageschraube 2160 dient. Mittels den zweiten Montageschrauben 2160 ist der mit der Erweiterungsvorrichtung 2' versehene Flachbildschirm 1' mit der in den Figuren 10 und 11 gezeigten Montagevorrichtung 5' verbindbar und stabil an einer Stange 6 montierbar.

Die mit der Computerbaugruppe 31 versehene Erweiterungsvorrichtung 2' von Figur 9 erlaubt somit die stabile Montage des Flachbildschirms 1'. Allerdings ist der Flachbildschirm l' mit einer dafür passenden tragenden Struktur 10' zu versehen, an der einerseits die Erweiterungsvorrichtung 2' und andererseits die Montagevorrichtung 5 befestigt werden kann.

Dadurch resultiert ferner ein erhöhter Durchmesser des Flachbildschirms 1'. Sofern der mit der Erweiterungsvorrichtung 2' versehene Flachbildschirm 1' in anderer Weise montiert werden soll, ist dessen tragende Struktur 10' entsprechend anzupassen.

Der vorliegenden Erfindung liegt daher die Aufgabe zugrunde, eine verbesserte Erweiterungsvorrichtung zu schaffen, mittels der wenigstens eine Baugruppe einschliesslich einer Computerbaugruppe mit einem Flachbildschirm verbindbar ist. Ferner ist ein entsprechender Flachbildschirm zu schaffen.

Insbesondere ist eine Erweiterungsvorrichtung zu schaffen, die es erlaubt, einen einfach ausgestalteten und kostengünstig herstellbaren Flachbildschirm auf verschiedene Arten und mit geringem Aufwand zu installieren.

Ferner sollen die Baugruppen in der Erweiterungsvorrichtung in einfacher Weise ergänzt und ausgetauscht werden können.

Diese Aufgabe wird mit einer Erweiterungsvorrichtung und einem Flachbildschirm gelöst, welche die in Anspruch 1 bzw. 10 angegebenen Merkmale aufweisen. Vorteilhafte Ausgestaltungen der Erfindung sind in weiteren Ansprüchen angegeben.

Die zur Verbindung mit einem Flachbildschirm vorgesehene Erweiterungsvorrichtung dient der Aufnahme wenigstens einer Baugruppe einschliesslich einer Computerbaugruppe, die zur Speicherung, Übertragung oder Verarbeitung von Bildinformationen geeignet ist, welche zu der von einer tragenden Struktur gehaltenen, grossflächigen Anzeigeeinheit des Flachbildschirms übertragbar sind.

Erfindungsgemäss weist die Erweiterungsvorrichtung eine Tragvorrichtung auf, die mit wenigstens einem Halteelement versehen ist, welches in ein entsprechend ausgestaltetes Aufnahmeteil der tragenden Struktur des Flachbildschirms eingreifen und die tragende Struktur, in Bezug auf die Tragvorrichtung, in konstanter Lage halten kann.

In einer ersten vorzugsweisen Ausgestaltung ist die Tragvorrichtung in einem Gehäuse der Erweiterungsvorrichtung angeordnet, das der Aufnahme der Baugruppen dient und aus der das wenigstens eine Halteelement heraus ragt.

In einer zweiten vorzugsweisen Ausgestaltung besteht die Tragvorrichtung aus einem mit wenigstens einem Halteelement versehenen, vorzugsweise einstückigen Profilteil, das einen zur Aufnahme der Baugruppen geeigneten Raum umfasst. Bei dieser Ausgestaltung der Erweiterungsvorrichtung wird kein Vorrichtungsgehäuse benötigt. Das der Bildung der Tragvorrichtung dienende Profilteil kann derart aus einem Blechstück gebogen werden, dass wenigstens ein Endstück nach oben ragt und das wenigstens eine Halteelement bildet. Vorzugsweise werden beide Endstücke des Profilteils nach oben gebogen. Öffnungen zum Beladen der Tragvorrichtung werden vorzugsweise an deren Rückseite vorgesehen. Frontseitig werden vorzugsweise nur Öffnungen vorgesehen, die dem Anschluss von Kabeln oder der Einführung von Datenträgern dienen.

Der Flachbildschirm kann daher mit einer einfach ausgestalteten tragenden Struktur versehen werden, die kostengünstig und raumsparend realisiert und in einfacher Weise mit der Erweiterungsvorrichtung verbunden bzw. auf diese aufgesetzt und somit universell befestigt werden kann. Die Erweiterungsvorrichtung dient daher nicht nur der funktionellen Erweiterung des Flachbildschirms, sondern erlaubt gleichzeitig dessen Installation nach Wunsch des Anwenders.

Die in der Erweiterungsvorrichtung vorgesehene Tragvorrichtung, die stabil mit der tragenden Struktur des Flachbildschirms verbunden wird und die somit deren Erweiterung bildet, erlaubt, den mit der Erweiterungsvorrichtung verbundenen Flachbildschirm am Boden aufzustellen. Dazu weist die Tragvorrichtung wenigstens ein gegebenenfalls schwenkbares Fusselement auf oder ist mit Fusselementen verbindbar. Alternativ kann die Tragvorrichtung mit einer Montagevorrichtung verbunden werden, die beispielsweise von einer Stange oder einer Wand gehalten ist, so dass die Erweiterungsvorrichtung schwebend installiert und anschliessend mit dem Flachbildschirm verbunden werden kann.

Durch die erfindungsgemässe Erweiterungsvorrichtung wird die Installation des Flachbildschirms daher nicht behindert, sondern deutlich erleichtert. Zudem sind mit der Erweiterungsvorrichtung verschiedene Installationsvarianten realisierbar.

Der Flachbildschirm kann daher in einer sowohl mechanisch als auch elektronisch schlanken Form bzw. Minimalkonfiguration hergestellt und am Installationsort mit den elektronischen Erweiterungsmodulen verbunden werden, die in der Erweiterungsvorrichtung anzuordnen sind, die gleichzeitig als Installationsvorrichtung dient. Flachbildschirme, die daher trotz der grossflächigen Anzeigeeinheit minimale Abmessungen aufweisen, können daher kostengünstig hergestellt und mit reduzierten Transportkosten geliefert werden.

Erfindungsgemässe Erweiterungsvorrichtungen können an einem anderen Ort hergestellt und nach Bedarf des Anwenders konfiguriert werden.

Trotz der Aufnahme von mehreren Baugruppen kann die Erweiterungsvorrichtung mit Abmessungen realisiert werden, die im Wesentlichen durch die Abmessungen der für die Installation vorgesehenen mechanischen Elemente bestimmt sind. Dazu ist die Tragvorrichtung vorzugsweise beidseitig mit Säulen versehen, die Auflageflächen für den Flachbildschirm aufweisen und die durch ein Mittelstück miteinander verbunden sind. Durch die Säulen und das Mittelstück wird eine Art U-Profil gebildet, in das eine oder mehrere Baugruppen, beispielsweise die Computerbaugruppe sowie Laufwerke für magnetische und optische Speichermedien eingefügt werden können. Die Dimensionen der Erweiterungsvorrichtung sind daher im Wesentlichen durch Abmessungen der Tragvorrichtung bestimmt, welche in Abhängigkeit von der zu tragenden Last des Flachbildschirms festgelegt wurden.

Zwischen der Erweiterungsvorrichtung und dem Flachbildschirm ist vorzugsweise nur eine einzelne Schnittstelle vorgesehen, über die Bildinformationen drahtlos oder drahtgebunden, beispielsweise mittels LVDS-Signalen, übertragen werden. Vorzugsweise sind alle in der Erweiterungsvorrichtung vorgesehenen Baugruppen, die Bildinformationen zur Anzeigeeinheit übertragen, zu dieser Schnittstelle kompatibel, so dass grundsätzlich alle diese Baugruppen an diese Schnittstelle angeschlossen werden können. Zum wahlweisen Anschluss von einer von mehreren Baugruppen an diese Schnittstelle ist erfindungsgemässe eine Durchschalteeinheit vorgesehen, die mittels einer Steuereinheit steuerbar ist.

Nachfolgend wird die Erfindung anhand von Zeichnungen näher erläutert. Dabei zeigt:
- Figur 1: einen erfindungsgemässen Flachbildschirm 1, der auf eine erfindungsgemässe Erweiterungsvorrichtung 2 aufgesetzt ist, in der mehrere Baugruppen, eine Computerbaugruppe 31, ein Laufwerk 32 für ein Speichermedium und eine Schnittstellenbaugruppe 33 vorgesehen sind;
- Figur 2: die Erweiterungsvorrichtung 2 von Figur 1 ohne Flachbildschirm 1;
- Figur 3: eine erfindungsgemässe Erweiterungsvorrichtung 2 in einer weiteren vorzugsweisen Ausgestaltung mit heute üblichen Baugruppen 31, ... , 3n;
- Figur 4: in einer weiteren vorzugsweisen Ausgestaltung eine einen Flachbildschirm 1 tragende Erweiterungsvorrichtung 2, die mittels einer von einer Stange 6 gehaltenen Montagevorrichtung 5 schwebend montiert ist;
- Figur 4a: die mit der Montagevorrichtung 5 verbundene und nach unten gedrehte Erweiterungsvorrichtung 2 von Figur 4 nach dem Abheben des Flachbildschirms 1;
- Figur 5: eine Erweiterungsvorrichtung 2 mit einer Tragvorrichtung 21, die einerseits dem Tragen des Flachbildschirms 1 und andererseits der Aufnahme von Baugruppen 31, ..., 3n dient.
- Figur 5a: die mit der Montagevorrichtung 5 verbundene Erweiterungsvorrichtung 2 von Figur 5.
- Figur 6: die Erweiterungsvorrichtung 2 und die Montagevorrichtung 5 von Figur 4, die mittels Schrauben 2160 miteinander verbunden sind, in einer Schnittdarstellung von oben gesehen;
- Figur 6a: eine Detaildarstellung der Erweiterungsvorrichtung 2 und der Montagevorrichtung 5 von Figur 6 in einer vorzugsweisen Ausgestaltung mit schraubenlos miteinander verbindbaren Elementen 29, 212;
- Figur 7: die Erweiterungsvorrichtung 2 von Figur 6 mit zum Abstützen auf einer Unterlage dienenden Fusselementen 215;
- Figur 8: zeigt in schematischer Darstellung eine in einer Erweiterungsvorrichtung 2 vorgesehene Schaltungsanordnung mit Baugruppen 31, ... , 3n die über eine Anschlussvorrichtung 301, eine Durchschalteeinheit 300 und eine Hauptschnittstelle 302 individuell mit einer im Flachbildschirm 1 vorgesehen Bildverarbeitungseinheit 303 verbindbar sind;
- Figur 9: der Flachbildschirm 1' und die Erweiterungsvorrichtung 2' aus der europäischen Patentanmeldung No. 03 405 797.6;
- Figur 10: der Flachbildschirm 1' und die Erweiterungsvorrichtung 2' von Figur 9 von hinten gesehen; und
- Figur 11: der Flachbildschirm 1' und die Erweiterungsvorrichtung 2' von Figur 9 von der Seite gesehen.

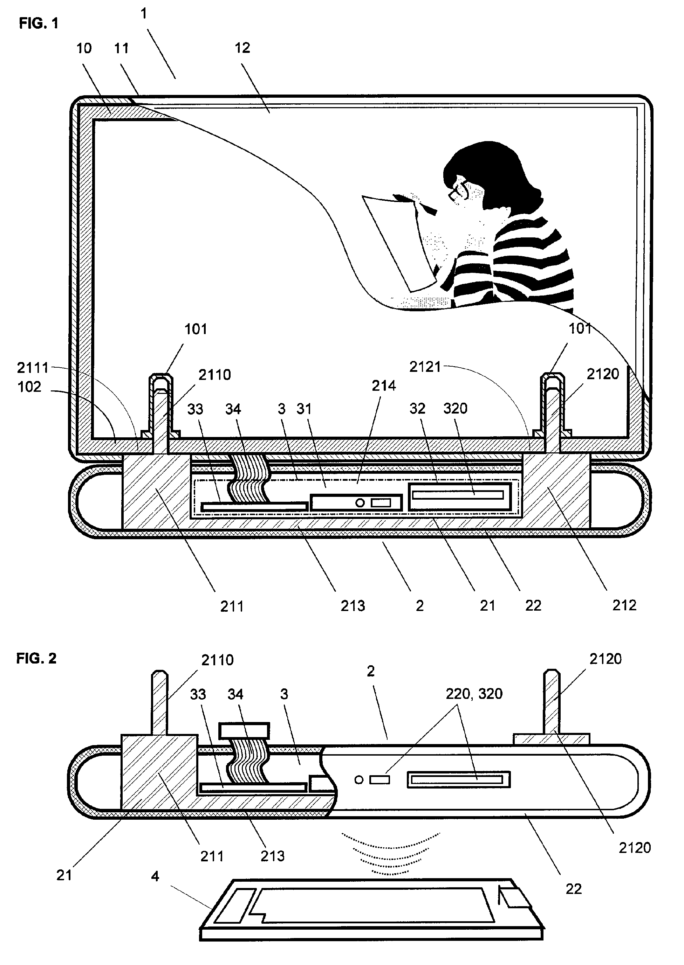

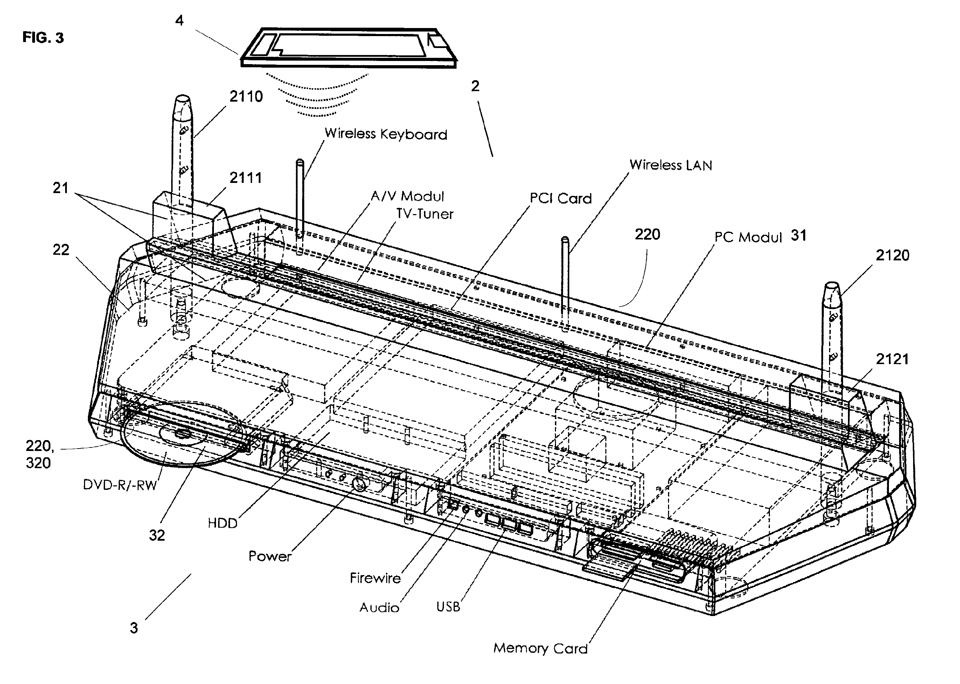

Figur 1 zeigt einen erfindungsgemässen Flachbildschirm 1, der auf eine erfindungsgemässe Erweiterungsvorrichtung 2 aufgesetzt ist, die ein Gehäuse 22 mit einer darin vorgesehenen Tragvorrichtung 21 aufweist. Der Flachbildschirm 1, der eine grossflächige, in einem Gehäuse 11 angeordnete und von einer tragenden Struktur 10 gehaltene Anzeigeeinheit 12 aufweist, ist mit dessen Unterseite bzw. mit einem Strukturelement 102 der tragenden Struktur 10 auf die in der Erweiterungsvorrichtung 2 vorgesehene Tragvorrichtung 21 gestützt. Die Tragvorrichtung 21 weist zwei durch ein Mittelstück 213 miteinander verbundene Säulen 211, 212 auf, die den Flachbildschirm 1 tragen. Auf den Säulen 211, 212 ist je ein dornförmig ausgestaltetes Halteelement 2110, 2120 angeordnet, die in hülsenförmig ausgestaltete, am Strukturelement 102 angeordnete Aufnahmeteile 101 praktisch spielfrei eingreifen und dadurch den Flachbildschirm 1 stabil in einer Lage senkrecht zur Erweiterungsvorrichtung 2 bzw. zu der darin vorgesehenen Tragvorrichtung 21 halten. Die Halteelemente 2110, 2120, die auch plattenförmig oder quaderförmig ausgestaltet sein können, sind mit der Tragvorrichtung 21 einstückig verbunden, darin angeschraubt (siehe Figur 3) oder daran angeschweisst.

Zwischen den beiden Säulen 211, 212 sind Baugruppe 31, ..., 3n angeordnet, die der Speicherung, Übertragung oder Verarbeitung von Bildinformationen dienen, welche drahtlos oder drahtgebunden über ein Kabel 331 zur Anzeigeeinheit 12 des Flachbildschirms 1 übertragbar sind. Durch die Tragvorrichtung 21 wird daher ein U-Profil mit einem freien Raum 214 gebildet, in dem die Baugruppen 31, ..., 3n bzw. ein gegebenenfalls mit einer Halterung versehenes Aggregat 3 mit Baugruppen 31, ..., 3n angeordnet sind. In Figur 1 sind eine Computerbaugruppe 31, ein Laufwerk 32 für optische oder magnetische Speichermedien und eine Schnittstellenbaugruppe 33 mit einem Verbindungskabel 331 gezeigt. Figur 3 zeigt, dass in der Erweiterungsvorrichtung 2 beliebige weitere Baugruppen 31, ..., 3n, wie Adapter, Tuner, Speichermodule, Stromversorgungsmodule, Schnittstellenmodule insbesondere für Video-, Audio- und Steuerdaten, sowie Netzwerkkarten für drahtlose und drahtgebundene Netzwerke angeordnet werden können. Alle Module die nicht für die Ansteuerung der Anzeigeeinheit 12 benötigt werden und zwingend im Gehäuse 11 des Flachbildschirms 1 anzuordnen sind, werden daher vorzugsweise in der Erweiterungsvorrichtung 2 angeordnet, so dass der Flachbildschirm in einer Minimalkonfiguration mit geringem Aufwand und mit minimalen Abmessungen produziert werden kann.

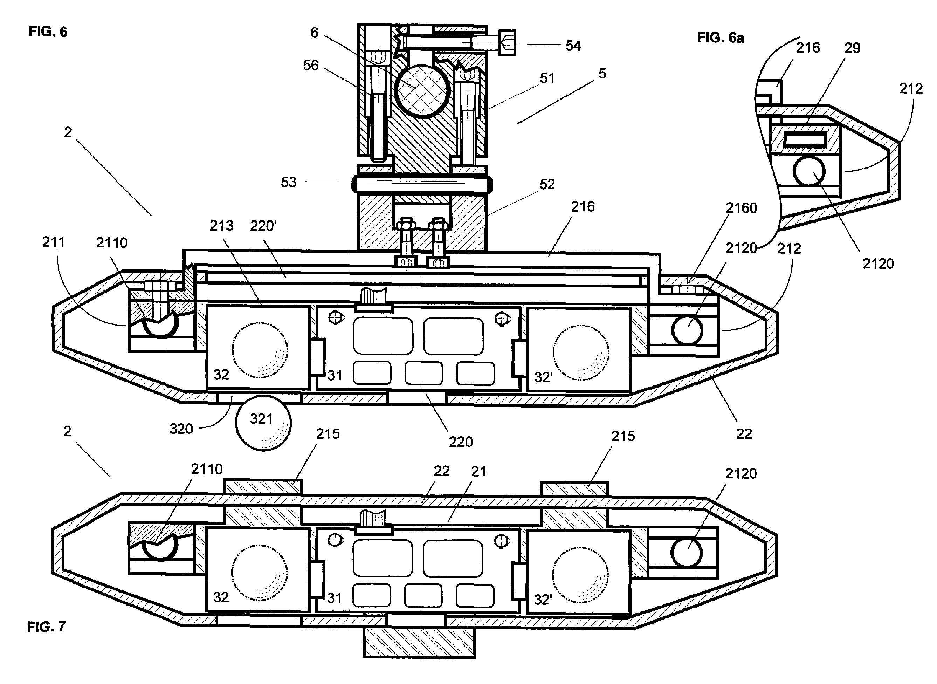

Figur 2 zeigt die Erweiterungsvorrichtung 2 von Figur 1 ohne Flachbildschirm 1. Auf der Frontseite des Gehäuses 22 der Erweiterungsvorrichtung 2 sind Öffnungen 220 für den Anschluss von Kabeln und die Einführung von Datenträgern 321 (siehe Figur 6) vorgesehen. Ferner ist eine Tastatur 4 gezeigt, mittels der Steuerbefehle drahtlos zur Computerbaugruppe 31 übertragbar sind.

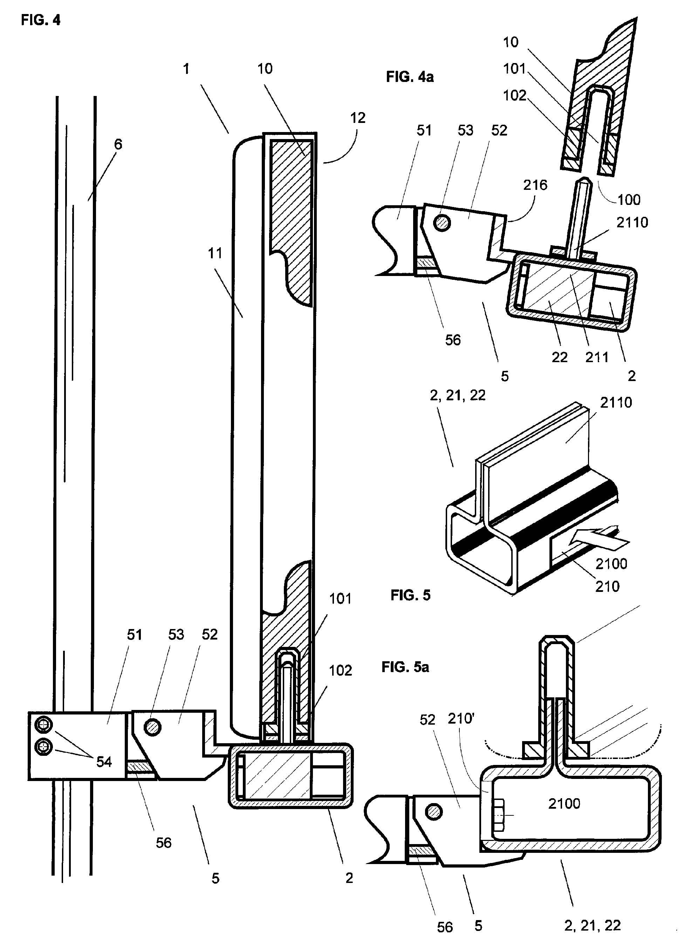

Die Erweiterungsvorrichtung 2 kann nun auf verschiedene Weise installiert werden. Einerseits kann die Erweiterungsvorrichtung 2 auf einer Unterlage abgestellt werden. Andererseits kann die Erweiterungsvorrichtung 2 mittels einer Montagevorrichtung 5 (siehe die Figuren 4 bis 7) schwebend montiert werden.

Figur 4 zeigt in einer vorzugsweisen Ausgestaltung eine Erweiterungsvorrichtung 2, die mittels einer von einer Stange 6 gehaltenen Montagevorrichtung 5 schwebend montiert ist und einen Flachbildschirm 1 trägt. Die in der Erweiterungsvorrichtung 2 vorgesehene Tragvorrichtung 21 weist ein nach aussen geführtes L-profilförmig ausgestaltetes Verbindungselement 216 auf (siehe Figur 4a), das mit einem Kopfstück 52 der Montagevorrichtung 5 verbunden ist, welches einen Montageblock 51 umgreift und mittels einer waagrecht auszurichtenden Welle 53 mit dem Montageblock 51 gelenkig verbunden ist, der seinerseits eine Stange 6 umfasst und mittels Schrauben 54 gehalten ist. Die Neigung des Kopfstücks 52 kann mittels Justierschrauben 56 eingestellt werden, wie dies in Figur 4a gezeigt ist.

Figur 5 zeigt eine aus einem einstückigen Profilteil bestehende Tragvorrichtung 21, die einen zur Aufnahme der Baugruppen 31, ..., 3n geeigneten Raum 2100 umfasst. Die aneinander liegenden Endstücke des Profilteils sind an der Oberseite der Tragvorrichtung 21 nach aussen bzw. nach oben gebogen und bilden ein flächiges Halteelement 2110. Ferner ist eine Öffnung 210 zum Beladen des Innenraums 2100 der Tragvorrichtung 21 gezeigt, die vorzugsweise an der Rückseite der Tragvorrichtung 21 angeordnet ist. Frontseitig sind vorzugsweise nur Öffnungen 210 vorgesehen, die dem Anschluss von Kabeln oder der Einführung von Datenträgern dienen. Figur 5a zeigt die mittels einer Schraube mit der Montagevorrichtung 5 verbundene Tragvorrichtung 21 von Figur 5.

Figur 6 zeigt die Erweiterungsvorrichtung 2 und die Montagevorrichtung 5 von Figur 4, die mittels eines Bügels 216 und Schrauben 2160 miteinander verbunden sind, in einer Schnittdarstellung von oben gesehen.

Figur 6a zeigt eine Detaildarstellung der Erweiterungsvorrichtung 2 und der Montagevorrichtung 5 von Figur 6, die in einer vorzugsweisen Ausgestaltung schraubenlos miteinander verbunden sind. Dazu ist das Endstück des Bügels 216 in einen an der Säule 212 vorgesehenen Aufnehmer 29 eingeführt.

Die Tragvorrichtung 21 ist in einem Vorrichtungsgehäuse 22 angeordnet, das frontseitig mit Öffnungen 220 für die Zuführung von Datenträgern 321 oder für den Anschluss von Kabeln und rückseitig mit einer Öffnung 220' für die Einführung und Montage der Baugruppen 31, ..., 3n versehen ist. In der vorliegenden Konfiguration ist die Erweiterungsvorrichtung 2 mit einer Computerbaugruppe 31, einem Laufwerk 32 für wechselbare optische Datenträger 321 und mit einem Laufwerk 32' für magnetische Datenträger ausgerüstet.

Figur 7 zeigt die Erweiterungsvorrichtung 2 von Figur 6 mit einer Tragvorrichtung 21, die Fusselemente 215 aufweist, mittels derer die Erweiterungsvorrichtung 2 und ein aufgesetzter Flachbildschirm 1 stabil gehalten werden.

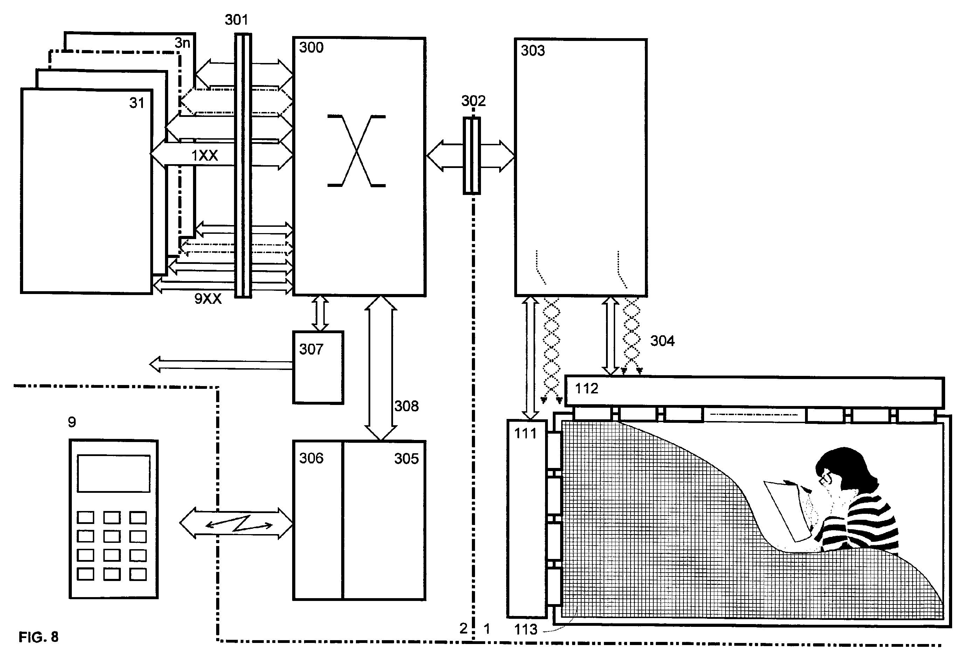

Figur 8 zeigt in schematischer Darstellung eine in einer Erweiterungsvorrichtung 2 vorgesehene Schaltungsanordnung mit Baugruppen 31, ... , 3n, die über eine Anschlussvorrichtung 301, eine Durchschalteeinheit 300 und eine Hauptschnittstelle 302 mit einer im Flachbildschirm 1 vorgesehen Bildverarbeitungseinheit 303 verbunden sind. Die von den Baugruppen 31, ..., 3n, beispielsweise in Form von TTL-Signalen (TTL: Transistor Transistor Logic) oder LVDS-Signalen, abgegebenen Bildinformationen werden voneinander getrennt über die Anschlussvorrichtung 301, beispielsweise eine so genannte Backplane, je einem Eingang der Durchschalteeinheit 300 zugeführt, mittels der die Bildinformationen einer der Baugruppen 31; ...; 3n zu einem mit der Hauptschnittstelle 302 verbundenen Ausgang durchgeschaltet werden. Die LVDS-Technologie ist beispielsweise in [5], An Overview of LVDS Technology (LVDS: Low Voltage Differential Signalling), National Semiconductor 1998, Publikationsnummer AN012326 beschrieben (siehe auch IEEE Standard 1596.3). Die an die Durchschalteeinheit 300 angeschlossenen Baugruppen 31, ..., 3n weisen daher ein der Bearbeitung von Bilddaten dienendes Grafikmodul und wenigstens einen Prozessor auf. Einzelne der Baugruppen 31, ..., 3n können natürlich auch über eine weitere Baugruppe 31 an die Durchschalteeinheit 300 angeschlossen werden.

Die Baugruppen 31, ..., 3n, die mit einem eigenen Grafikmodul versehen sind, das an die Dienste der betreffenden Baugruppen 31, ..., 3n angepasst ist, kann daher unabhängig von einer getrennt vorgesehenen Videokarte mit der im Flachbildschirm 1 vorgesehene Bildsteuereinheit 303 verbunden werden, welche Steuerdaten an die mit der Anzeigeeinheit 113 verbundenen Treibereinheiten 111, 112 abgibt. Die Verwendung der Durchschalteeinheit 300 führt zu einem streng modularen Aufbau der Schaltungsanordnung. Der Anwender kann daher beliebige Baugruppen 31, ..., 3n, die mit der Hauptschnittstelle 302 des Flachbildschirms 1 kompatibel sind, in die Erweiterungsvorrichtung 2 einbauen. In vorzugsweisen Ausgestaltungen wird die Schnittstelle der Bildsteuereinheit 303 den Anforderungen der zugeschalteten Baugruppen 31, ..., 3n jeweils flexibel angepasst, wodurch die Flexibilität und Kompatibilität des Flachbildschirms 1 weiter erhöht werden.

Die Figuren 9, 10 und 11 zeigen den oben beschriebenen Flachbildschirm 1' und die Erweiterungsvorrichtung 2' aus der europäischen Patentanmeldung No. 03 405 797.6.

Die Erweiterungsvorrichtung 2 und der Flachbildschirm 1 wurden in bevorzugten Ausgestaltungen beschrieben. Ausgehend von der der erfindungsgemässen Lehre sind ferner weitere Ausgestaltungen realisierbar. Insbesondere sind andere Abmessungen der Vorrichtungsteile sowie andere Mittel zur Verbindung und gegenseitigen Justierung der Vorrichtungsteile realisierbar. Weiterhin ist es auch möglich, einzelne Verbindungselemente durch kinematische Umkehr zu vertauschen.

Die Montage und die elektrische Verbindung der Baugruppen 31, ..., 3n innerhalb des Vorrichtungsgehäuses 22 oder innerhalb der Tragvorrichtung 21 erfolgt mit bekannten fachmännischen Massnahmen. Die Abmessungen der Erweiterungsvorrichtung 2 wird an die Grösse der Baugruppen 31, ..., 3n angepasst.

### Literaturverzeichnis:

- [1]: Europäische Offenlegungsschrift EP 1 265 210 A1
- [2]: Internationale Offenlegungsschrift WO 02/25943
- [3]: Europäische Offenlegungsschrift EP 1 244 000 A2
- [4]: U.S. Offenlegungsschrift US 2002/0120750 A1
- [5]: An Overview of LVDS Technology (LVDS: Low Voltage Differential Signalling), National Semiconductor 1998, Publikationsnummer AN012326 beschrieben (siehe auch IEEE Standard 1596.3)

## Patentansprüche

1. Erweiterungsvorrichtung (2) für einen Flachbildschirm (1), mit wenigstens einer Baugruppe (31, ..., 3n) einschliesslich einer Computerbaugruppe (31), die der Speicherung, Übertragung oder Verarbeitung von Bildinformationen dient, die zu der von einer tragenden Struktur (10) des Flachbildschirms (1) gehaltenen, grossflächigen Anzeigeeinheit (12) übertragbar sind, **dadurch gekennzeichnet, dass** die Erweiterungsvorrichtung (2) eine Tragvorrichtung (21) mit wenigstens einem Halteelement (2110, 2120) aufweist, das an der Oberseite der Tragvorrichtung (21) angeordnet ist und in ein entsprechend ausgestaltetes Aufnahmeteil (101), das an der Unterseite der tragenden Struktur (10) des Flachbildschirms (1) angeordnet ist, eingreifen und die tragende Struktur (10), in Bezug auf die Tragvorrichtung (21) in konstanter Lage halten kann.

2. Erweiterungsvorrichtung (2) nach Anspruch 1, **dadurch gekennzeichnet, dass** die Tragvorrichtung (21) und die wenigstens eine Baugruppe (31, ..., 3n) in einem Vorrichtungsgehäuse (22) angeordnet sind, aus dem das wenigstens eine Halteelement (2110, 2120) heraus ragt, oder dass die Tragvorrichtung (21) aus einem mit wenigstens einem Halteelement (2110, 2120) versehenen Profilteil besteht, welches einen der Aufnahme der wenigstens einen Baugruppe (31, ..., 3n) dienenden Innenraum (2100) und wenigstens eine Zugangsöffnung (210, 210') aufweist.

3. Erweiterungsvorrichtung (2) nach Anspruch 1 oder 2, **dadurch gekennzeichnet, dass** wenigstens ein dorn-, stab- oder plattenförmiges Halteelement (2110, 2120) vorgesehen ist, das senkrecht, in einer Ebene parallel zur Anzeigeeinheit (12) ausgerichtet ist.

4. Erweiterungsvorrichtung (2) nach Anspruch 1, 2 oder 3, **dadurch gekennzeichnet, dass** die Tragvorrichtung (21) beidseitig mit Säulen (211, 212) versehen ist, die durch ein Mittelstück (213) miteinander verbunden sind und die Auflageflächen (2111, 2121) für den Flachbildschirm (1) aufweisen, wobei die Säulen (211, 212) und das Mittelstück (213) vorzugsweise ein U-Profil bilden, in das die wenigstens eine Baugruppe (31, ..., 3n) eingefügt ist.

5. Erweiterungsvorrichtung (2) nach Anspruch 3 oder 4, **dadurch gekennzeichnet, dass** die Tragvorrichtung (21) wenigstens ein Fusselement (215) aufweist oder mit Fusselementen (215) verbindbar ist, die dem stabilen Halten der auf eine Unterlage abgestellten Erweiterungsvorrichtung (2) dienen.

6. Erweiterungsvorrichtung (2) nach einem der Ansprüche 1 bis 5, **dadurch gekennzeichnet, dass** die Tragvorrichtung (21) mit einer von einer Stange (6) oder einer Wand gehaltenen Montagevorrichtung (5) verbindbar ist, mittels der die Erweiterungsvorrichtung (2) und der gegebenenfalls darauf aufgesetzte Flachbildschirm (1) schwebend installierbar ist.

7. Erweiterungsvorrichtung (2) nach Anspruch 6, **dadurch gekennzeichnet, dass** die Säulen (211, 212) und/oder das Mittelstück (213) der Tragvorrichtung (21) über einen Bügel (216) mit der Montagevorrichtung (5) verbindbar sind.

8. Erweiterungsvorrichtung (2) nach Anspruch 7, **dadurch gekennzeichnet, dass** der Bügel (216) mit der Tragvorrichtung (21) verschraubbar ist und/oder in diese eingehängt werden kann.

9. Erweiterungsvorrichtung (2) nach einem der Ansprüche 1 bis 8, **dadurch gekennzeichnet, dass** im Vorrichtungsgehäuse (22) eine Durchschalteeinheit (300) vorgesehen ist, von der Bildinformationen von jeweils einer der Baugruppen (31, ..., 3n) zu einer vorzugsweise im Flachbildschirm (1) vorgesehen Bildverarbeitungseinheit (303) durchschaltbar sind, die der Ansteuerung der Treibereinheiten (111, 112) der Anzeigeeinheit (12) dient.

10. Flachbildschirm (1) verbunden mit einer Erweiterungsvorrichtung (2) gemäss einem der Ansprüche 1 bis 9, welche ein Vorrichtungsgehäuse (22) mit wenigstens einer Baugruppe (31, ..., 3n) einschliesslich einer Computerbaugruppe (31) aufweist, die der Speicherung, Übertragung oder Verarbeitung von Bildinformationen dient, die drahtlos oder drahtgebunden zu der von der tragenden Struktur (10) des Flachbildschirms (1) gehaltenen, grossflächigen Anzeigeeinheit (12) übertragbar sind, **dadurch gekennzeichnet, dass** die Erweiterungsvorrichtung (2) eine Tragvorrichtung (21) mit wenigstens einem Halteelement (2110, 2120) aufweist, das an der Oberseite der Tragvorrichtung (21) angeordnet ist und in ein entsprechend ausgestaltetes Aufnahmeteil (101), das an der Unterseite (100) der tragenden Struktur (10) des Flachbildschirms (1) angeordnet ist, eingreift und die tragende Struktur (10), in Bezug auf die Tragvorrichtung (21) in konstanter Lage hält.

11. Flachbildschirm (1) nach Anspruch 10, **dadurch gekennzeichnet, dass** die Tragvorrichtung (21) und die wenigstens eine Baugruppe (31, ..., 3n) in einem Vorrichtungsgehäuse (22) angeordnet sind, aus dem das wenigstens eine Halteelement (2110, 2120) heraus ragt, oder dass die Tragvorrichtung (21) aus einem mit wenigstens einem Halteelement (2110, 2120) versehenen Profilteil besteht, welches einen der Aufnahme der wenigstens einen Baugruppe (31, ..., 3n) dienenden Innenraum (2100) und wenigstens eine Zugangsöffnung (210, 210') aufweist.

12. Flachbildschirm (1) nach Anspruch 10 oder 11, **dadurch gekennzeichnet, dass** die tragende Struktur (10), welche die Anzeigeeinheit (12) vorzugsweise rahmenförmig umfasst, ein parallel zur Unterseite des Bildschirmgehäuses (11) und gegebenenfalls daraus hervortretendes, vorzugsweise plattenförmiges Strukturelement (102) aufweist, welches das wenigstens eine Aufnahmeteil (101) aufweist und an der Tragvorrichtung (21), vorzugsweise an den Auflageflächen (2111, 2121) der Säulen (211, 212) anliegt.

13. Flachbildschirm (1) nach Anspruch 10, 11 oder 12, **dadurch gekennzeichnet, dass** im Vorrichtungsgehäuse (22) eine Durchschalteeinheit (300) vorgesehen ist, von der Bildinformationen von jeweils einer der Baugruppen (31, ..., 3n) zu einer vorzugsweise im Flachbildschirm (1) vorgesehen Bildverarbeitungseinheit (303) durchschaltbar sind, die der Ansteuerung von mit der Anzeigeeinheit (12) verbundenen Treibereinheiten (111, 112) dient.

14. Flachbildschirm (1) nach Anspruch 10, 11, 12 oder 13, **dadurch gekennzeichnet, dass** die den Flachbildschirm (1) tragende Erweiterungsvorrichtung (2) auf einer Unterlage positionierbar oder mittels einer Montagevorrichtung (5) schwebend montierbar ist.
